# EUROPEAN PATENT APPLICATION

(11) **EP 1 336 928 A1**
(43) Date of publication of application: **20.08.2003**
(21) Application number: 02080610.5
(22) Date of filing: 31.12.2002
(51) Int. Cl.: G06F 17/60

(54) **Method and computer program for monitoring the transport of objects in a distribution system**

(30) Priority: 31.12.2001 NL 1019682
(71) Applicant: Neopost Industrie B.V., 9201 BX Drachten (NL)
(72) Inventor: Scheltes, René, 9203 VD Drachten (NL); Edens, Bertus Karel, 9204 JT Drachten (NL)
(74) Representative: Prins, Adrianus Willem

(57) **Abstract**

For monitoring the transport of an object, the object (1-21) is sent to a detection point. Signallings representing arrival of the object and related objects belonging to the same group at the detection point are registered. The target time for receipt of a signalling representing arrival of the object at the detection point is determined or adjusted depending on time points of signalling of arrival of related objects at the detection point. If after the target time no arrival of the object at the detection point has been registered yet, a warning signal is generated automatically. A computer program for automatically carrying out the proposed method is also described.

## Description

### FIELD AND BACKGROUND OF THE INVENTION

This invention relates to a method for monitoring the transport of objects, as in a postal or other distribution system in which objects are transported to distribution points, are sorted at the distribution points according to destination, and are further transported in batches of objects having the same destination or destinations located relatively close to each other. In the process, the objects are transported to at least one detection point and the objects are detected at that at least one detection point. In response to a monitored object not being timely detected at a detection point, a warning signal is generated. In response to this warning signal, for instance a replacement object and/or a message can be sent. In general, it is desirable to be warned of disturbances in the transport as early as possible, so that as much time as possible remains to enable corrective measures to be taken.

In practice, it has become more and more customary to make the data concerning the progress of the transport of objects accessible also to the client, that is, to parties who do not themselves carry out or manage the transport. To these parties, it is less well known at what times sent objects can be expected at defined places. As a consequence, often, unnecessary delay arises before corrective measures can be taken. Especially when sending objects of relatively little value and in large numbers, such as mailings to large groups of addressees, it is moreover not economically acceptable to predict the progress of transport for all objects individually and to consult if the prediction is being met.

### SUMMARY OF THE INVENTION

It is an object of the invention, in transporting large quantities of objects, to obtain warnings concerning disturbances of the transport in a simple manner and with a short response time.

This object is achieved by designing the monitoring of the transport of each of the objects to be monitored in accordance with claim 1.

Since the target time at which the presence of an object at a detection point is to be signalled is determined on the basis of signalling of the presence of related objects at that detection point, this automatically provides an adjustment of the target time at which the object is to have arrived, to the normal transport time for the transport of related objects to the respective detection point. Thus, the time of warning in case of a disturbance in the transport of an object is also adjusted to that transport time.

The invention further provides a computer program according to claim 20 which is designed for use within the framework of the method according to claim 1.

Particularly advantageous elaborations of the invention are laid down in the dependent claims.

In the following, the invention is further illustrated and elucidated on the basis of an exemplary embodiment with reference to the drawing.

### BRIEF DESCRIPTION OF THE DRAWING

Fig. 1 is a schematic representation of an example of distribution of objects between a number of locations; and

Fig. 2 is a schematic representation of communication between different parties with regard to the monitoring of the transport of objects.

### DETAILED DESCRIPTION

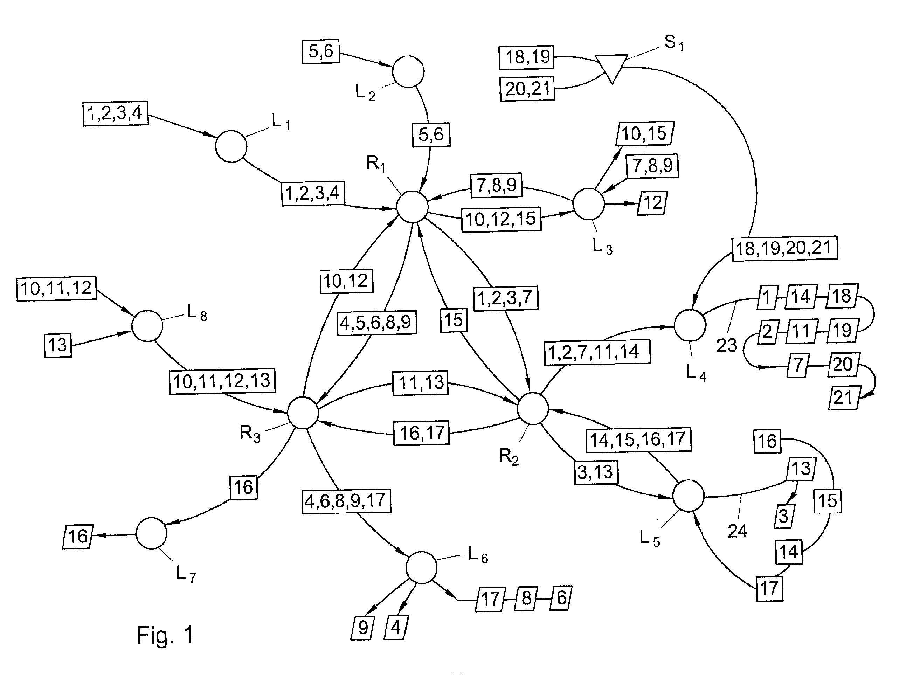

Fig. 1 schematically represents, by way of example, the transport of objects in the form of postal items between a number of locations. For the sake of clarity, the numbers of locations and objects that are transported are much more limited than is typical in practice. Of course, this holds not only for the total number of objects to be sent, but also for the number of objects to be sent per sender and the number of senders, etc. In the representation of Fig. 1, the numbers represent the objects 1-21, or at least they indicate from what starting points the objects leave and by what route they are transported. When the objects are jointly transported or are jointly present, they are represented in a common frame. The destinations of the objects are represented by frames having upstanding sides inclined to the right.

For distributing the sorted mail, a network with three regional distribution points R₁, R₂ and R₃ is used. For collecting and distributing mail in cooperation with the regional distribution point R₁, the system has three local distribution points L₁, L₂ and L₃. Similarly, objects coming from or destined for the local distribution points L₄ and L₅ are sent via the regional support point R₂ and objects coming from or destined for the local distribution points L₆, L₇ and L₈ are sent via the regional support point R₃.

The diagram in Fig. 1 illustrates a number of different routes. Thus, the set 1, 2, 3, 4 which is sent to the local distribution point L₁ can be seen as a representation of the sender who sends large quantities of mail, which bulk postal matter is carried individually to the post office.

The postal matter 5, 6 going to local station L₂ can be seen as a consignment from a medium sender. The same holds for the postal matter 18, 19 and 20, 21 going to the special distribution point S₁, and for the postal matter 10, 11, 12 going to the local distribution point L₈.

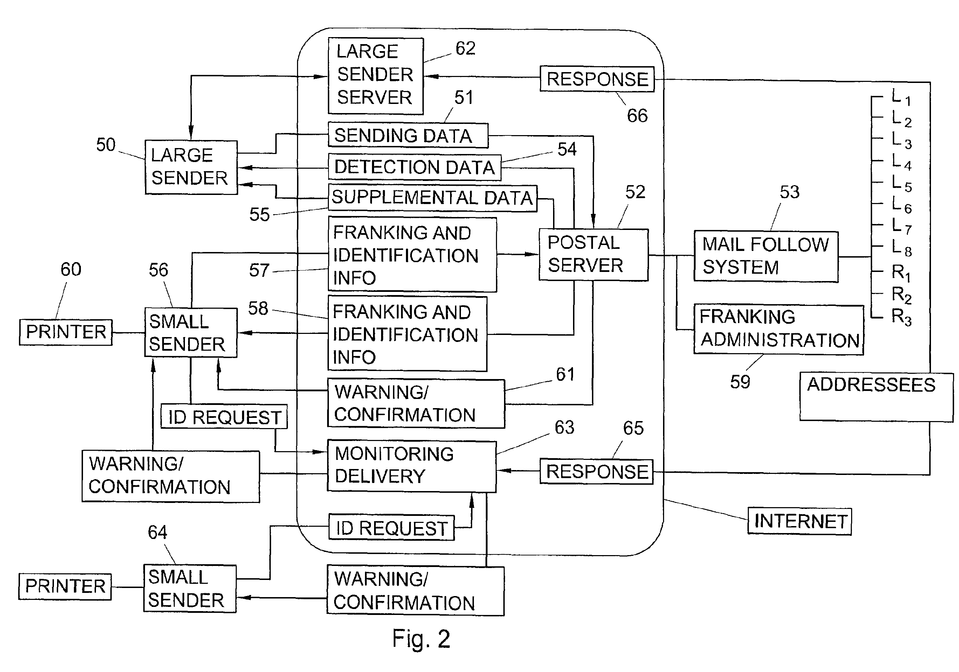

The practice of the invention will first of all be discussed from the perspective of the large sender 50, which large sender is also represented in the communication diagram (Fig. 2). The objects, in this example postal items 1, 2, 3, and 4, are to be sent to four different addresses. The addresses for postal items 1 and 2 are located along a delivery route 23 starting from a local distribution point L₄. Address 3 is located along a delivery route 24 starting from a local distribution point L₅ and address 4 is at local distribution point L₆, being, for instance, a postoffice box.

The sender nonetheless wishes to be able to take action as fast as possible when objects do not reach, or are not going to reach, the intended addressee, for instance by sending a replacement message in response to a warning signal. Fast detection is also relevant if the missing postal item represents a substantial value, such as credit cards, because the chance of recovery is then greater and damage can be prevented by blocking operations and the like.

To enable fast detection of disturbances in the dispatch, the sender 50 sends sending data 51 to a postal server 52 which in turn is coupled to a mail follow system 53. This mail follow system 53 is coupled to reading heads at the local and regional distribution points L₁-L₈ and R₁-R₃. The sending data 51 are subsequently registered and passed on via the mail follow system 53, so that the mail follow system 53 can be set for recognizing the correct patterns.

Next, the postal items 1-4 are sent to the respective destinations by presenting them for dispatch at the local distribution station L₁. There, the documents 1-4 traverse a sorting operation, which offers an opportunity to scan them and, upon recognition, to confirm their presence at the local distribution station L₁ by signalling 54 to the large sender 50.

In response to signallings representing arrival of the postal items 1-4 at the detection point L₁, the presence of the postal items is registered.

After being sorted, the postal items 1-4 are all forwarded to the regional distribution point R₁ and from there the postal items 1-3 proceed to the regional distribution point R₂ and the postal item 4 proceeds to the regional distribution point R₃. The postal items 1, 2 proceed from the regional distribution point R₂ to the local distribution point L₄, from where they are delivered to the addresses along the delivery route 23. The postal item 3 is distributed via local distribution point L₅ and delivered to an address along a delivery route 24. The postal item 4, finally, proceeds from the regional distribution point R₃ to the local distribution point L₆ and is there collected from a postoffice box or the like, as symbolized by the direct arrow.

For monitoring the transport of the postal items, it is important to determine target times for reception of a signalling which represents arrival of each of the postal items at the different detection points (for instance the last local distribution stations). For manually tracking the progress of the transport, the quantity of postal items is generally far too large. However, determining a target time without thorough knowledge of the distribution system entails either undue delay or too many error messages.

By determining or adjusting the target time for each of the postal items depending on time points of signalling of arrival of related postal items at the at least one detection point, the target time is automatically adjusted to the time it generally takes to reach the respective detection point. In response to missing postal items, a warning signal can then be generated fast.

The most accurate determination of a target time can be achieved when all postal items arrive at the same detection point, as in this example the postal items 1, 2, 3, 4 reaching the regional support point R₁. For the determination of the target time, for instance a period of time can be added to the time at which presence of the first of the postal items 1-4 at the regional distribution point R₁ was signalled. The duration of this time period can be determined, for instance, on the basis of previous experiences with comparable sets of postal items at the respective detection point.

It is also possible, however, to determine target times for postal items which are not carried to the same detection point if as a rule there is some correlation between the time it takes the different postal items to reach the respective detection points. This could be of importance for the respective postal consignment for the regional detection points L₄, L₅, L₆ if postal items which have simultaneously left the regional detection point R₁ also arrive approximately simultaneously at the local distribution station L₄, L₅, L₆.

This last occurs in many cases if the postal item and the related postal items have departed from a common point of departure or from a common previous detection point.

To enhance the probability that for a number of postal items the arrival at a detection point, and hence the signalling thereof, will lie within a particular time window, it is further advantageous if the postal item and the related postal items have a departure time or detection time in a predetermined, common time interval.

The detection time interval per group of related postal items that applies to a detection point, which time interval is added to the time point of first signalling of a postal item from the group at the detection point in order to determine the target time, can also be a fixed time interval. This can be, for instance, the time interval in which a batch of objects can be processed at a detection point.

The target time can further be determined in part on the basis of variation in elapsed time between time points of signalling of objects from different other groups of related postal items at the respective detection point. If the variation is large, a relatively long time interval after signalling of a first one of a group of related postal items at a detection point must be utilized before a warning signal is generated in response to the absence of a postal item, so as to avoid false warning signals.

When, as is the case for different ones of the distribution stations represented in Fig. 1, postal items are supplied from different points of departure, it is advantageous if for a detection point different target times apply for objects coming from different points of departure, so that the target times are adjusted to the spread in the time points when postal items arrive from different points of departure.

It is also possible to adjust or determine the target time for a postal item or postal items depending on time points of the signalling of at least two related postal items at the respective detection point or detection points, for instance by advancing the target time if the postal items are detected with a high frequency.

The target time can moreover be adjusted more and more finely depending on time points of signalling of the presence of related objects according as more of the related objects have been signalled at the detection point or detection points. The probability that, leaving disturbances aside, all postal items will have come in within a particular time period is increasingly higher according as more documents from a group of related postal items have come in. Thus, for instance, the length of the time interval until the target time can, if x% of the objects have been detected, be set at 1/x % of the elapsed time plus a margin, while the target time is frozen if, for instance, 80% of the objects of a group have been detected.

When during the processing of a group of postal items a split arises, for instance owing to a portion of a postal consignment having ended up with a first batch of postal items and another portion having ended up with another batch of postal items, it is advantageous if the postal items are signalled at least at first and second detection points located in succession along a transport path. In response to such a situation, the group can then be divided into two subgroups, and for the different subgroups different target times for arrival at the second detection point are determined. Thus, if postal items are missing from the first subgroup, action can be taken sooner.

Signalling the presence of postal items at at least first and second detection points located in succession along a transport path is also advantageous in itself, because this renders it possible, in the event of early loss of a postal item, to realize a correspondingly early signalling of the absence of that postal item.

A further way of detecting errors very fast is to signal that postal items are being detected in an order counter to the transport direction of those postal items. Preferably, postal items which have been detected as moving counter to the direction of transport are also excluded from the group of related objects, thereby eliminating the necessity for having to wait and establish if the respective postal item arrives at a detection point after all. Further, in such a situation, preferably a warning signal is generated.

As can be seen in Fig. 1, along different routes, in each case different groups of postal items are formed. To be able to automatically use the relation between those postal items for predicting the arrival of postal items, the division of postal items into groups can proceed in response to variation in the density of numbers of signallings of presence of objects per time unit at a detection point. Such variations generally constitute indications of batchwise transport and can thus, without factual knowledge about the batches, be used to be able to recognize batches from tracking and tracing information. In that context, for routes to which a sender sends few postal items, supporting information for rapid detection of any disturbances can be obtained if for the determination of the target time of a postal item also the signalled presence of postal items of other senders is utilized. Thus, the monitoring of postal item 4 in the routes from R₁ to R₃ and from R₃ to L₆ can be improved by utilizing the detections of the postal items 5, 6, 8, 9 and 6, 8, 9, 17, respectively, for the prediction of the target times of postal item 4 at R₃ and L₆.

Sending such supplemental information is designated in Fig. 2 with reference numeral 55.

Combining tracking and tracing information of different postal items to be able to determine target times for a postal item for different detection points makes it possible, also for small senders and even private individuals, to realize an automatic watch for anomalies in the mail dispatch. This can for instance be realized with advantage in combination with on-line franking, which already involves the sending of unique codes which the user must print on his postal item. If for a postal item an automatic warning in case of delay or loss has been opted for, then it is coupled in the paths which it traverses together with other postal items with unique identifications. This application can be illustrated, for instance, by the dispatch of the postal items 14-17 which are collected from public mailboxes during a collection round. After having been detected in the distribution station L₅, they travel as a batch from distribution station L₅ to distribution station R₂. The target time for the postal items 14-17 from this group can therefore be automatically determined for the path to R₂, from detection of at least one of the others upon arrival at R₂. In a corresponding manner, the determination of the time window of arrival for the next route sections can be estimated by predicting the expected arrival from the signalled arrival of postal items then traveling along in the same batch.

For small senders it is often not attractive to perform the automatic monitoring themselves. Therefore, according to the example represented in Fig. 2, the small sender 56 requests a franking and an identification (step 57). In response, the user receives franking information and identification information 58 from the postal server 52. In addition, the franking administration debits the franking value against the user's balance. After the user has printed the franking and identification information on his postal item with a printer, he can put the postal item in the mail at any time, for instance in the mailbox which will be emptied by distribution station L₅. From the moment when the postal item has first been detected, it is subject to the monitoring system as described earlier. By electronic route the user receives only a confirmation of the arrival at the most downstream detection station or a warning that the letter has not been signalled anymore (step 61).

The relevance of such combination possibilities holds especially for senders who send relatively small quantities. The senders of the postal items 18, 19 and 20, 21, respectively, make use thereof by combining the postal consignments and presenting them to a courier distribution point S₁, from where the postal items are sent directly to the local distribution point L₄ which is closest to the addresses where the postal items are to be delivered. Any feedback information from the addressees can be combined to be able to predict more reliably when all postal items might normally speaking be expected to have arrived.

If there is a substantial correlation between the arrival times of postal items of a postal consignment at different detection points, these may be grouped to form a combined detection point. For instance, this applies in many cases to addresses located on one and the same mailman route 23, 24 or if the time of travel to different distribution points is approximately the same.

It is incidentally noted that the related objects of which the time point of signalling of detection at a detection point forms an input variable for determining the target time for the arrival of a monitored object, do not themselves need to be monitored, nor does any target time need to be determined for them. It is therefore possible that the detection of objects whose transport is not automatically monitored is used for determining target times for the arrival at detection points, or at least the signalling thereof, of objects whose transport *is* automatically monitored.

The earlier-mentioned possibility can be advantageously utilized by providing that at least a number of the detection points are formed by delivery addresses of the postal items. Signallings of presence of objects at the delivery addresses can then be obtained in the form of confirmations of receipt received from the addressees. These confirmations can be, for instance, in the form of e-mails, data which have been filled in via an on-line form, or involve the entering of a code specified on the delivered object after a feedback telephone number has been selected. The time lapse involved in the arrival of such feedback messages can be utilized to choose a suitable moment for a reminder or renewed messaging. Arrival of first replies can also be used as an indicator of short-term required capacity for processing replies.

The signalling of arrival of postal items in the form of feedback messages by the user makes it possible to apply the invention also without detection in the postal system. A first illustration of this is formed by feedback messages 66 which addressees can send to a server 62 of the large sender 50, who can then assume that if a particular percentage of feedback messages has been reached, and the frequency of feedback messages decreases strongly again, the time of resending or other measures has come.

Such a system can also be used advantageously by users who do not have a sufficient volume of mail available to make predictions based on the feedback messages of addressees, about the moment when addressees could have reported back if they had received the postal item. Such small senders 56, 64 can attain the necessary volumes by having their sending information 67 and feedback information run via a delivery monitoring agent 63, 21, to which end they request an identification code (step 67) which is included in the feedback message 65 (possibly via internet). This delivery monitoring agent 63, 21 can be formed, for instance, by a computer program in a form readable by a data processor, which runs on a server and determines from the sending information and the feedback information within which time period feedback information regarding a particular postal item is plausible and sends a warning when after elapse of that time period no feedback information 65 has been received yet.

Systems based on feedback by the user can be used especially advantageously if the user has an interest in the feedback, for instance to activate a telephone card or a credit card.

## Claims

1. A method for monitoring the transport of an object, comprising:
sending the object (1-21) to at least one detection point via a distribution system with distribution points (L, R, S);
determining a target time for arrival of said object at said at least one detection point;
if the object, or related objects belonging to the same group, is or are detected at the at least one detection point, signalling the arrival of the respective object or the respective objects;
in response to signallings representing arrival of the objects and related objects belonging to the same group at the at least one detection point, registering said signallings;
and
if for the object, at an associated target time, no signalling has been received which represents arrival at said at least one detection point, generating a warning signal;
wherein said target time for said object is determined or adjusted depending on time points of signalling of arrival of related objects at the at least one detection point.

2. A method according to claim 1, wherein the object and the related objects have a common point of departure (L, R, S).

3. A method according to claim 1 or 2, wherein the object and the related objects have a time of departure or time of detection in a predetermined common time interval.

4. A method according to any one of the preceding claims, wherein the object and the related objects have a common detection point or detection points in a common area as destination.

5. A method according to any one of the preceding claims, wherein there applies to said at least one detection point a detection time interval per group of related objects of a predetermined duration, and wherein said target time for the object is determined by adding said duration to the time point of the first signalling which represents presence of at least one of the related objects at the detection point.

6. A method according to any one of the preceding claims, wherein said detection time interval for a group of related objects is determined or adjusted depending on elapsed time between time points of signalling of objects of at least one other group of related objects at said at least one detection point.

7. A method according to claim 5 or 6, wherein said target time is partly determined on the basis of variation in elapsed time between time points of signalling of objects from different other groups of related objects at said at least one detection point.

8. A method according to any one of the preceding claims, wherein for said at least one detection point, different target times apply for objects coming from different points of departure.

9. A method according to any one of the preceding claims, wherein the target time for said object is determined or adjusted depending on time points of signalling of at least two of said related objects at said at least one detection point.

10. A method according to claim 9, wherein the target time is further adjusted depending on time points of signalling of said related objects from said group according as more of said related objects have been signalled at said at least one detection point.

11. A method according to any one of the preceding claims, wherein in response to said warning signal a replacement object or message is sent.

12. A method according to any one of the preceding claims, wherein said object and said related objects form a group of objects which are signalled at at least first and second detection points located in succession along a transport path, and wherein said group of objects is divided into two subgroups, with a first subgroup containing objects whose presence at the first detection point has been signalled during a first time interval, and with the second subgroup containing objects whose presence at the first detection point has been signalled during a second time interval, and wherein for the second detection point different target times for the different subgroups are determined.

13. A method according to any one of the preceding claims, wherein the presence of said objects is detected at at least first and second detection points located in succession along a transport path.

14. A method according to claim 13, wherein objects which have been detected in an order counter to the transport direction at different detection points are excluded from said group of objects.

15. A method according to claim 14, wherein in response to detection of an object at different detection points in an order counter to the transport direction, a warning signal is generated.

16. A method according to any one of the preceding claims, wherein the division of objects into groups takes place in response to variation in the density of numbers of signallings of presence of objects per time unit at a detection point.

17. A method according to any one of the preceding claims, wherein different detection points are grouped to form a combined detection point.

18. A method according to any one of the preceding claims, wherein at least a number of said detection points are formed by delivery addresses of said objects, and wherein signallings of presence of objects at said delivery addresses are obtained in the form of confirmations of receipt from addressees.

19. A method according to any one of the preceding claims, wherein the transport path of at least a number of said objects comprises a return path for reply consignments to be sent by addressees.

20. A computer program in a form readable by a data processor, for monitoring the transport of an object (1-21), comprising:
instructions for registering the sending of the object to at least one detection point;
instructions for registering signallings representing arrival of the object and related objects belonging to the same group at the at least one detection point;
instructions for determining a target time for receipt of a signalling representing arrival of said object at said at least one detection point; and
instructions for generating a warning signal if for the object, at an associated target time, no signalling has been received which represents arrival at said at least one detection point,
wherein the instructions for determining said target time for said object are arranged for determining said target time depending on time points of signalling of arrival of related objects at the at least one detection point.
